# EUROPEAN PATENT SPECIFICATION

(11) **EP 1 427 288 B1**
(45) Date of publication and mention of the grant of the patent: **29.12.2004**
(21) Application number: 02772359.2
(22) Date of filing: 17.09.2002
(51) Int. Cl.: A01N 47/38

(54) **FUNGICIDE COMPOSITION COMPRISING PYRIMETHANIL AND IPRODIONE**
FUNGIZIDE ZUSAMMENSETZUNG ENTHALTEND PYRIMETHANIL UND IPRODIONE
COMPOSITION FONGICIDE COMPRENANT PYRIMETHANIL ET IPRODIONE

(30) Priority: 18.09.2001 FR 0112033
(43) Date of publication of application: 16.06.2004
(73) Proprietor: Bayer CropScience S.A., 69009 Lyon (FR)
(72) Inventor: DUVERT, Patrice, F-69004 Lyon (FR); HIDEO, Dodo, Jardim Rizzo,CEP 05587-200-S.Paulo - SP (BR)
(86) International application number: PCT/EP2002/011125
(87) International publication number: WO 2003/024228

(56) References cited:
- FR-A- 2 692 108
- DATABASE CA [Online] CHEMICAL ABSTRACTS SERVICE, COLUMBUS, OHIO, US; MAENO, SHINICHIRO ET AL: "Synergistic agrochemical fungicides containing 2-anilino-4- methylpyrimidines." retrieved from STN Database accession no. 119:111281 XP002197609 & JP 05 112408 A (KUMIAI CHEMICAL INDUSTRY CO, JAPAN) 7 May 1993 (1993-05-07) cited in the application

## Description

The present invention relates to a novel fungicidal composition comprising pyrimethanil and iprodione in a ratio ranging from 1/3 to 3, and the use of such a composition for controlling particular plant diseases or for controlling specific phytopathogenic fungi present or capable of appearing on plants.

Pyrimethanil is described in the book entitled The Electronic Pesticide Manual version 1.1 (by British Crop Protection Council, published by Clive Tomlin); this book also describes iprodione for its fungicidal properties.

French Patent Application No. 2 692 108 which essentially relates to mixtures based on pyrimethanil and numerous other compounds gives a list of more than eleven types of families of fungicidal compounds and of more than 70 candidate compounds for the,mixture; among this systematic list of compounds, only 23 mixtures have led to laboratory experimentation, none under open field conditions. Thus, even if the pyrimethanil and iprodione mixture in a ratio of 5 to 1 is given as an example for controlling *Botrytis cinerea* under laboratory conditions, no result under open field conditions is given.

Moreover, a summary of Japanese patent application JP-5 112 408 mentions fairly numerous compositions based on particular pyrimidine derivatives mixed with iprodione in particular. However, this document describes very broad ranges of ratios of active substances present and remains very general regarding the properties of these compositions without providing results.

However, it is still desirable to improve the products which can be used by the farmer for controlling fungicidal diseases of plants and in particular of crops.

It is also still desirable to improve the fungicidal products used for controlling plant diseases caused by fungi of the genera which are *Alternaria, Sclerotinia, Monilinia, Wilsonomyces, Ascochyta* and *Mycosphaerella.*

It is also still desirable to reduce the doses of chemical products applied to plants or fruits, in particular by reducing the applied doses of the products.

It is finally still desirable to increase the range of available antifungal products in order to find among them those best suited to specific uses.

It has also become essential to be able to have antifungal means of treatment which limit or avoid phenomena of resistance of phytopathogenic organisms, in particular the appearance or the spread of strains of the genus *Alternaria* which are resistant to iprodione.

It is also advantageous to have such products which have the broadest possible activity spectrum.

It is also very advantageous to be able to provide the user a solution in the form of an antifungal agent which makes it possible to offer better protection by redistribution through the treated plant, in particular the foliage.

To the numerous problems which have just been disclosed, there are added most often those linked to the protection of the environment, environmental problems to which the users of fungicidal active ingredients, as well as consumers of products obtained from these crops, are increasingly sensitive.

Another difficulty relating to the use of numerous fungicidal substances lies in the accumulation of several of the problems which have just been disclosed. It is indeed even more difficult to solve the problems posed when they accumulate because the solutions which can be envisaged are sometimes antinomical or even antagonistic.

A first object of the present invention consists in providing fungicidal compositions possessing a broad activity spectrum, that is to say possessing a substantial activity on a larger number of phytopathogenic fungi than the number of phytopathogenic fungi treated with known compositions.

A second object of the invention consists in providing fungicidal compositions possessing both a preventive effect and a curative effect, in particular an improved curative effect compared with known fungicidal compositions.

Another object of the present invention consists in providing fungicidal compositions which can effectively control fungal strains resistant to known fungicidal compositions, in particular to iprodione.

Another aim of the present invention is to provide fungicidal compositions which are effective at significantly lower doses compared with the doses currently applied.

Another object of the present invention consists in providing a fungicidal composition possessing preventive, curative, eradicant and antisporulant properties.

Other objects of the invention will appear in the disclosure of the invention which is presented in the remainder of the present description.

Surprisingly, it has been discovered that all of these objects may be achieved completely or in part using the fungicidal compositions which are the subject of the present invention.

The present invention also proposes achieving all or some of the objectives which have just been mentioned.

The present invention relates to a composition comprising pyrimethanil and iprodione in respective proportions ranging from 1/3 to 3, preferably ranging from 1/2 to 2.

References to methods for preparing pyrimethanil and iprodione will be found in the book cited above.

Usually, the compositions according to the invention comprise between 0.00001 and 100%, preferably between 0.001 and 80%, of active compounds, whether these compounds are combined, or whether they are in the form of two active ingredients used separately.

Unless otherwise stated, the proportions and percentages used or described throughout the present description and in the claims which will follow are proportions or percentages by weight.

For their use in practice, the active substances of the composition according to the invention are rarely used alone.

Thus, for their use, these active ingredients are usually combined with a solid or liquid carrier which can be used in particular in the agricultural field, and optionally with at least one surfactant and/or one or more auxiliary agents.

In particular, as carriers, there may be used inert and customary carriers; likewise, as surfactant, there may be used the customary surfactants in the field of formulation of compositions, which are intended for agricultural use, in particular for the treatment or protection of crops such as those of the present invention.

According to another embodiment of the present invention, the various fungicidal compositions according to the invention which have been described up until now may also be in the form of tank mixes.

These fungicidal compositions in the form of tank mixes are usually in the form of dilute fungicidal compositions.

Most often, these so-called tank mix fungicidal compositions are mixed in the reservoir of the application device.

Usually, the fungicidal compounds used in the compositions according to the invention are therefore combined with one or more carriers and/or one or more substances useful for their formulation. Thus, where appropriate, the compositions according to the invention may comprise up to 99% of carrier and/or up to 25% of one or more surfactants and/or up to 25% of one or more formulating agents.

In the present disclosure, the term carrier designates a natural or synthetic, organic or inorganic material with which the active ingredient(s) are in the compositions according to the invention, in particular to facilitate their application to a plant, a fruit or alternatively to seeds or to the soil.

This carrier is therefore generally inert and should most often be acceptable in agriculture, in particular by the treated plant or by the fruits of this plant in the broad sense.

As examples of solid carriers which can be used, there may be mentioned natural or synthetic silicates, resins, waxes, fine powders or granules of clay, in particular kaolinic clay, diatomaceous earth, bentonite or acidic clay, synthetic silicon oxide hydrate, talcs, ceramics, other minerals including sericite, quartz, sulphur, activated charcoal, calcium carbonate, hydrated silica, or alternatively industrial fertilizers such as ammonium sulphate, ammonium phosphate, ammonium nitrate, urea or ammonium chloride.

As examples of liquid carriers which can be used, there may be mentioned water, alcohols and in particular methanol or ethanol, ketones and in particular acetone, methyl ethyl ketone or cyclohexanone, petroleum fractions, aromatic hydrocarbons including benzene, toluene, xylene, ethylbenzene or methylnaphthalene, nonaromatic hydrocarbons including hexane, cyclohexane, kerosene or gas oil, liquefied gas, esters including ethyl acetate and butyl acetate, nitriles including acetonitrile and isobutyronitrile, ethers including diisopropyl ether or dioxane, amides including N,N-dimethylformamide or N,N-dimethylacetamide, halogenated hydrocarbons including dichloromethane, trichloroethane or carbon tetrachloride, dimethyl sulphoxide, vegetable oils including soybean oil or cottonseed oil.

The surfactant(s) may be emulsifying, dispersing or wetting agents of the ionic or nonionic type.

It is possible, for example, to mention salts of polyacrylic acids, salts of lignosulphonic acids, salts of phenolsulphonic or naphthalenesulphonic acids, polycondensates of ethylene oxide with fatty alcohols or with fatty acids or with fatty amines, substituted phenols, in particular alkylphenols or arylphenols, salts of sulphosuccinic acid esters, derivatives of taurine, in particular alkyl taurates, phosphoric esters of polyoxyethylated alcohols or phenols; it is also possible to mention most particularly alkyl sulphonate salts, alkylaryl sulphonates, alkylaryl ethers, polyoxyethylenic derivatives thereof, polyethylene glycol ethers, polyalcohol esters, derivatives of sugars, alcohols and the like.

The presence of at least one surfactant is generally essential when at least one of the active ingredients and/or the inert carrier are not soluble, in particular in water, in the case where the carrier agent for the application is water.

In the compositions according to the invention, it is also possible to combine with the active compounds all sorts of other ingredients or agents such as, for example, protective colloids, adhesives, thickening agents, thixotropic agents, penetrating agents, stabilizing agents including isopropyl hydrogen phosphate, 2,6-di-tert-butyl-4-methylphenol, 2-tert-butyl-4-methoxyphenol and 3-tert-butyl-4-methoxyphenol, vegetable or mineral oils, fatty acids or esters thereof, sequestering agents, dispersing agents including casein, gelatin, saccharides and in particular starch powder, gum arabic, certain derivatives of cellulose or alginic acid, derivatives of lignin, bentonite, synthetic polymers soluble in water, in particular polyvinyl alcohol, polyvinylpyrrolidone, polyacrylic acids, and the like, as well as other active ingredients known for their pesticidal, in particular insecticidal or fungicidal, properties; or for their plant growth promoting properties, in particular fertilizers; or for their insect or plant growth regulating properties.

Thus, the fungicidal compositions according to the invention may take fairly diverse forms, in particular they may be in solid or liquid forms.

More generally, the compositions according to the invention may take numerous forms of formulations; thus, these compositions comprising the active compounds may be used in the form of an aerosol dispenser; bait (ready-to-use); suspension of capsules; cold fogging concentrate; dustable powder; emulsifiable concentrate; aqueous/aqueous type emulsion; oil/inverse type emulsion; encapsulated granule; fine granule; suspension concentrate for seed treatment; compressed gas; gas generating product; granule; hot fogging concentrate; macrogranule; microgranule; oil-dispersible powder; oil miscible suspension concentrate; oil-miscible liquid; paste; plant rodlet; powder for dry seed treatment; seed coated with a pesticide; smoke candle; smoke cartridge; smoke generator; smoke pellet; smoke rodlet; smoke tablet; smoke tin; soluble concentrate; soluble powder; solution for seed treatment; suspension concentrate (= flowable concentrate); ultra low volume liquid; ultra low volume suspension; vapour releasing product; water-dispersible granules or tablets; water dispersible powder for slurry treatment; water-soluble granules or tablets; water-soluble powder for seed treatment; wettable powder; as well as possible mixtures, associations or combinations of these various forms.

In addition to pyrimethanil and iprodione, the composition according to the invention may also comprise other active compounds and in particular one or more active compounds useful for protecting plants against pests.

Such additions of additional active ingredients then make it possible to add to the novel properties of the compositions according to the invention, the known or unknown properties of such additional active ingredients.

Among such additional active compounds, the composition according to the invention may therefore comprise one or more insecticidal, herbicidal or fungicidal compounds or growth regulating compounds.

Among the additional fungicidal active ingredients which may be used alone or in combination with other active ingredients, in particular pesticides, in the composition according to the invention, there may be mentioned 2-phenylphenol; 8-hydroxyquinoline sulphate; ac 382042; ampelomyces quisqualis; azaconazole; azoxystrobin; *Bacillus subtilis;* benalaxyl; benomyl; biphenyl; bitertanol; blasticidin-s; Bordeaux mixture; borax; bromuconazole; bupirimate; calboxin; calcium polysulphide; captafol; captan; carbendazim; carpropamid (ktu 3616); cga 279202; chinomethionat; chlorothalonil; chlozolinate; copper hydroxide; copper naphthenate; copper oxychloride; copper sulphate; copper oxide; cymoxanil; cyproconazole; dazomet; debacarb; dichlofluanid; dichlomezine; dichlorophen; diclocymet; dicloran; diethofencarb; difenoconazole; difenzoquat; difenzoquat metilsulphate; diflumetorim; dimethirimol; dimethomorph; diniconazole; diniconazole-m; dinobuton; dinocap; diphenylamine; dithianon; dodemorph; dodemorph acetate; dodine; dodine free base; edifenphos; epoxiconazole (bas 480f); ethasulfocarb; ethirimol; etridiazole; famoxadone; fenamidone; fenarimol; fenbuconazole; fenfin; fenfuram; fenhexamid; fenpiclonil; fenpropidin; fenpropimorph; fentin acetate; fentin hydroxide; ferbam; ferimzone; fluazinam; fludioxonil; fluoroimide; fluquinconazole; flusilazole; flusulfamide; flutolanil; flutriafol; fluoxastrobing folpet; formaldehyde; fosetyl; fosetyl-aluminium; fuberidazole; furalaxyl; fusarium oxysporum; gliocladium virens; guazatine; guazatine acetates; gy-81; hexachlorobenzene; hexaconazole; hymexazol; icia 0858; ikf-916; imazalil; imazalil sulphate; imibenconazole; iminoctadine; iminoctadine triacetate; iminoctadine tris[albesilate]; ipconazole; iprobenfos; iprodione; iprovalicarb; kasugamycin; kasugamycin hydrochloride hydrate; kresoxim-methyl; mancopper; mancozeb; maneb; mepronil; mercury(II) chloride; mercury(II) oxide; mercury(I) chloride; metalaxyl; metalaxyl-m; metam; metam-sodium; metconazole; methasulfocarb; methyl isothiocyanate; metiram; metominostrobin (ssf-126); mon65500; myclotbutanil; nabam; naphthenic acid; natamycin; nickel bis(dimethyidithiocarbamate); nitrothal-isopropyl; nuarimol; octhilinone; ofurace; oleic acid (fatty acids); oxadixyl; oxine-copper; oxycarboxin; penconazole; pencycuron; pentachlorophenol; pentachlorophenyl laurate; perfurazoate; phenylmercury acetate; *Phlebiopsis gigantea*; phthalide; piperalin; polyoxine b; polyoxines; polyoxorim; potassium hydroxyquinoline sulphate; probenazole; prochloraz; procymidone; propamocarb; propamocarb hydrochloride; propiconazole; propineb; prothiioconazote; pyrazophos; pyributicarb; pyrifenox;; pyroquilon; quinoxyfen; quintozene; rh-7281; sec-butylamine; sodium 2-phenylphenoxide; sodium pentachlorophenoxide; spiroxamine (kwg 4168); streptomyces griseoviridis; sulphur; tar oils; tebuconazole; tecnazene; tetraconazole; thiabendazole; thifluzamide; thiophanate-methyl; thiram; tolclofos-methyl; tolylfluanid; triadimefon; triadimenol; triazoxide; trichoderma harzianum; tricyclazole; tridemorph; triflumizole; triforine; triticonazole; validamycin; vinclozolin; zinc naphthenate; zineb; ziram; the compounds having the chemical name (e,e)-2-(2-(1-(1-(2-pyridyl)propyloxyimino)-1-cyclopropylmethyloxymethyl)-phenyl)-3-methoxy-propenoate and 3-(3,5-dichlorophenyl)-4-chloropyrazole.

According to another equally advantageous aspect, the present invention also relates to a method for the curative or preventive control of phytopathogenic organisms of plants of the genera *Alternaria*, *Sclerotinia, Monilinia*, *Wilsonomyces, Ascochyta* and *Mycosphaerella*, such a method according to the invention is based on the use of pyrimethanil and iprodione.

Preferably, the method according to the invention uses a composition according to the invention as has just been described.

During their use in the method according to the invention, pyrimethanil is used in quantities ranging from 50 to 1 000 g/ha, preferably from 100 to 600 g/ha.

As for iprodione, it is advantageously used in quantities ranging from 50 to 1 000 g/ha, preferably from 100 to 600 g/ha.

Among the procedures or methods of treatment and/or protection according to the invention, those which are used for the treatment and/or protection of crops are preferred, and among such methods or procedures, those for the protection of vegetable, fruit or oil-producing crops are most particularly preferred.

The said use of the methods according to the invention may be carried out according to various forms and in particular using a fairly large variety of modes of application, but also according to various techniques of application, or alternatively for the protection of various types, varieties or families of vegetables or plants, or alternatively for combating or controlling various types of phytopathogenic organisms.

As regards the various modes of application usefully employed during the methods according to the invention, simultaneous, separate, alternate or sequential modes of application are in particular possible.

Nevertheless, most often, the modes of application useful during the methods according to the invention and which are preferred consist of modes of simultaneously applying the active compounds.

However, a relatively advantageous variant of the method according to the invention uses an alternate mode of application of the active compounds.

In addition to the various embodiments of the methods according to the invention which have just been described, the said methods can also use a fairly large number of application techniques; thus, as said techniques, there may be mentioned in particular dusting, dipping, spraying, smoking or fogging, and the like.

Other variants of the modes of application useful for the methods according to the invention exist, particularly depending on the part(s) of the plant or vegetable which are treated or which are to be treated.

Thus, the methods according to the invention may be carried out for the treatment or protection of plant propagation material or seeds, in particular grain seeds, tubers or rhizomes; for the treatment of roots, or for the treatment of the stems or leaves of the plant; as well as for the treatment of the roots, or alternatively of the fruits or other parts of the plant which possess a substantial economic or agronomic value.

Furthermore, the said methods according to the invention may be carried out for the treatment of plants at numerous stages of their development, in particular for the treatment of the seeds, seedlings or seedlings for transplantation or plants for transplantation, or alternatively plants, fruits or harvests.

Among the phytopathogenic fungi of crops which may be advantageously controlled according to the present invention, there may be mentioned adelomycetes of the genera
- *Alternaria*, for example *Alternaria solani* (Alternaria disease of Solanaceae, and in particular of the tomato and the potato), *Alternaria dauci* (Alternaria disease of the carrot), Alternaria *porri* (Alternaria disease of the onion), *Alternaria kikuchiana* (Alternaria disease of the pear tree), *Alternaria mali* (Alternaria disease of the apple tree), *Alternaria brassicae* and *Alternaria brassicicola* (Alternaria disease of crucifers),
- *Sclerotinia,* for example *Sclerotinia minor, Sclerotinia sclerotiorum* (Sclerotinia diseases of the lettuce, of the haricot bean, and the like),
- *Monilinia*, for example *Monilinia fructicola*, *Monilinia fructigena* or *Monilinia laxa* (Monilia diseases of stone fruit trees),
- *Wilsonomyces*, for example *Wilsonomyces carpophila* (shot hole of stone fruit trees),
- of the genus *Ascochyta,* for example *Ascochyta pisi*,
- *Mycosphaerella,* for example *Mycosphaerella pinodes* (anthracnoses of protein-rich peas) .

An additional aspect of the present invention relates to a product for sumultaneous, separate, alternate or sequential application of pyrimethanil and iprodione.

The examples which follow will allow better illustration of the various aspects of the present invention, in particular of the aspects relating to the compositions and to the methods according to the invention using the said fungicidal compositions. However, these examples do not in any way limit the scope of the present invention.

### Example 1:

This example illustrates the efficacy of a composition according to the invention which comprises pyrimethanil and iprodione as active ingredients for controlling *Alternaria solani* on the potato.
It makes it possible in particular to demonstrate the very good persistence of action of the composition according to the invention.
The following fungicidal compounds are compared:
- iprodione at the dose of 750 g/ha,
- pyrimethanil at the dose of 600 g/ha,
- iprodione + pyrimethanil at the doses of 250+150, 300+180 and 375+225 g/ha to be applied in the mixture volume of 1 000 l/ha.
The products are applied to potato (Bintje variety) which is sensitive to *Alternaria solani*.
The various products under study are sprayed every 12 days for a total of 3 applications in a treatment program during which mancozeb at 2 400 g/ha, applied every 13 days, is intercalated between each spraying according to the scheme:
mancozeb - product tested - mancozeb - product tested - mancozeb - product tested.
   Scores for the disease (percentage of foliar surface area destroyed) are awarded 15 days after the second application of the experiment products (15 DAB), 8 days and 17 days after the third application of the experimental products (8 DAC and 17 DAC).
   The results are presented in table 1.

**Table 1**

| | 15 DAB | 8 DAC | 17 DAC |
|---|---|---|---|
| control | 20 | 43.75 | 57.50 |
| iprodione (750) | 1.75 | 4.38 | 10 |
| pyrimethanil (600) | 3.44 | 8.75 | 13.13 |
| iprodione+pyrimethanil (250+150) | 4.38 | 5.94 | 7.81 |
| iprodione+pyrimethanil (300+180) | 4.06 | 5.31 | 6.25 |
| iprodione+pyrimethanil (375+225) | 2.94 | 4.69 | 5.94 |

### Example 2:

This example illustrates the efficacy of a composition according to the invention which comprises pyrimethanil and iprodione as active ingredients for controlling *alternaria dauci* on carrot. The following fungicidal compounds are compared:
- iprodione at the dose of 750 g/ha,
- pyrimethanil at the dose of 600 g/ha,
- iprodione + pyrimethanil at the doses of 300+180 and 375+225 g/ha to be applied in a mixture volume of 1 000 l/ha.
The products are applied to carrot (Nantes variety) which is sensitive to *Alternaria dauci*.
The various products to be studied are sprayed at the rate of 3 applications in total with intervals of 8 days between the 1st and 2nd applications and of 10 days between the 2nd and 3rd application.
Scores for the disease (percentage of foliar surface area destroyed) are awarded 7 days after the 1st and 2nd applications and then 3 days and 8 days after the 3rd application.
The results are presented in table 2

**Table 2**

| | 7 DAA | 7 DAB | 3 DAC | 8 DAC |
|---|---|---|---|---|
| control | 36.2 | 52.5 | 68.7 | 94.4 |
| iprodione (750) | 8.7 | 11.9 | 19.4 | 35 |
| pyrimethanil (600) | 11.9 | 21.9 | 31.2 | 57.5 |
| iprodione+pyrimethanil (300+180) | 6.6 | 9.4 | 15.6 | 32.5 |
| iprodione+pyrimethanil (375+225) | 6.9 | 9.7 | 18.1 | 28.7 |

### Example 3:

This example illustrates the efficacy of a composition according to the invention which comprises pyrimethanil and iprodione as active ingredients for controlling *Alternaria porri* on onion.
The following fungicidal compounds are compared:
- iprodione at the dose of 750 g/ha,
- pyrimethanil at the dose of 600 g/ha,
- iprodione + pyrimethanil at the doses of 300+150 g/ha to be applied in a mixture volume of 1 000 l/ha.
A total of 5 successive preventive sprayings are carried out on onion plants which were initially 31 days old and at a rhythm of 13 days.
32 days after the last application, harvesting is carried out and the yield is calculated in terms of kg of bulbs/ha and the yield gain expressed by comparing with the untreated control.
The results are presented in table 3.

**Table 3**

| | Yield (kg/ha) | Yield gain (%) |
|---|---|---|
| control | 28 300 | / |
| iprodione (750) | 33 000 | 16.8 |
| pyrimethanil (600) | 31 500 | 11.5 |
| iprodione+pyrimethanil (300+150) | 33 400 | 18.1 |

### Example 4:

This sample illustrates the efficacy of a composition according to the invention which comprises pyrimethanil and iprodione as active ingredients for controlling *Sclerotinia sclerotinium* on lettuce.
The following fungicidal compounds are compared:
- iprodione at the dose of 750 g/ha,
- pyrimethanil at the dose of 800 g/ha,
- iprodione + pyrimethanil at the doses of 375+400 g/ha.
All the products are applied in a mixture volume of 500 l/ha.
A total of 5 sprayings are carried out on lettuce plants (Manita variety).
An inoculation with *Sclerotinia* is carried out the next day after the first treatment by spreading contaminated rape plant stems on the soil.
11 countings of the lettuce plants attacked by *Schlerotinia* are carried out throughout the trial.
The results are presented in table 4.

**Table 4**

| | 1 | 2 | 3 | 4 | 5 | 6 | 7 | 8 | 9 | 10 | 11 |
|---|---|---|---|---|---|---|---|---|---|---|---|
| control | 4.8 | 7.8 | 9 | 17.8 | 23.3 | 29.5 | 31.5 | 36.8 | 38.9 | 43.1 | 47.3 |
| iprodione (750) | 1 | 2.5 | 3 | 4 | 4 | 4.8 | 5.5 | 5.9 | 6.7 | 7.4 | 7.9 |
| pyrimethanil (800) | 3.5 | 5.5 | 8 | 14.8 | 18 | 22.8 | 26 | 29.4 | 31.4 | 33.9 | 35.8 |
| iprodione + pyrimethanil (375+400) | 0.5 | 1.3 | 2 | 2.3 | 2.5 | 2.3 | 2.8 | 3 | 3 | 3.3 | 4.4 |

### Example 5:

This example illustrates the efficacy of a composition according to the invention which comprises pyrimethanil and iprodione as active ingredients for controlling *Ascochyta pisi* on protein-rich peas.
The following fungicidal compounds are compared:
- iprodione at the dose of 500 g/ha,
- pyrimethanil at the dose of 600 g/ha,
- iprodione + pyrimethanil at the doses of 400+400 and 500+500 g/ha to be applied in a mixture volume of 300 l/ha.
Two successive sprayings are carried out on pea plants (Baccara variety) at the flowering stages and then two weeks after the first application. 23 days after the second application, the percentage of diseased leaves and pods is calculated; the results are presented in table 5.

**Table 5**

| | Amount of diseased leaves (%) | Amount of diseased leaves (%) |
|---|---|---|
| control | 51 | 45 |
| iprodione (500) | 46 | 34 |
| pyrimethanil (600) | 21 | 16 |
| iprodione+pyrimethanil (400+400) | 20 | 16 |
| iprodione+pyrimethanil (500+500) | 17 | 10 |

The composition according to the invention allows, particularly at the dose of 500+500 g/ha of active ingredients, a high protection of the leaves of the plants and especially of the pods which are the parts of the plant to be protected as a priority, in particular because of their importance from an agronomic point of view.
All these examples show the superiority of the compositions according to the invention compared with known active ingredients used alone.

## Claims

1. A fungicidal composition comprising pyrimethanil and iprodione in respective proportions ranging from 1/3 to 3, preferably ranging from 1/2 to 2.

2. The composition as claimed in claim 1, comprising a carrier, which is solid or liquid, which can be used in particular in the agricultural field, and optionally at least one surfactant and/or one or more auxiliary agents.

3. A method for the curative or preventive control of phytopathogenic organisms of plants of the genera *Alternaria, Sclerotinia, Monilinia, Wilsonomyces, Ascochyta* and *Mycosphaerella* **characterized by** the use of pyrimethanil and iprodione.

4. The method as claimed in claim 3, **characterized in that** the pyrimethanil is used in quantities ranging from 50 to 1 000 g/ha.

5. The method as claimed in claim 3, **characterized in that** the pyrimethanil is used in quantities ranging from 100 to 600 g/ha.

6. The method as claimed in any one of claims 3 to 5, **characterized in that** the iprodione is used in quantities ranging from 50 to 1 000 g/ha.

7. The method as claimed in any one of claims 3 to 6, **characterized in that** the iprodione is used in quantities ranging from 100 to 600 g/ha.

8. The method as claimed in any one of claims 3 to 7, for the treatment and/or protection of crops, preferably for the protection of vegetable, fruit or oil-producing crops.

9. The method as claimed in any one of claims 3 to 8, for the treatment and/or protection of vegetable, fruit or oil-producing crops.

10. The method as claimed in any one of claims 3 to 9, for controlling fungi of the genera
- *Alternaria,* for example *Alternaria solani* (Alternaria disease of Solanaceae, and in particular of the tomato and the potato), *Alternaria dauci* (Alternaria disease of the carrot), *Alternaria porri* (Alternaria disease of the onion), *Alternaria kikuchiana* (Alternaria disease of the pear tree), *Alternaria mali* (Alternaria disease of the apple tree), *Alternaria brassicae* and *Alternaria brassicicola* (Alternaria disease of crucifers),
- *Sclerotinia,* for example *Sclerotinia minor, Sclerotinia sclerotiorum* (Sclerotinia diseases of the lettuce, of the haricot bean, and the like),
- *Monilinia,* for example *Monilinia fructicola*, *Monilinia fructigena* or *Monilinia laxa* (Monilia diseases of stone fruit trees),
- *Wilsonomyces,* for example *Wilsonomyces carpophila* (shot hole of stone fruit trees),
- of the genus *Ascochyta*, for example *Ascochyta pisi,*
- *Mycosphaerella*, for example *Mycosphaerella pinodes* (anthracnoses of protein-rich peas) .

## Patentansprüche

1. Fungizide Zusammensetzung, die Pyrimethanil und Iprodione in entsprechenden Anteilen im Bereich von 1/3 bis 3, vorzugsweise im Bereich von 1/2 bis 2, enthält.

2. Zusammensetzung nach Anspruch 1, die einen Träger, der fest oder flüssig ist und insbesondere auf dem Gebiet der Landwirtschaft eingesetzt werden kann, sowie gegebenenfalls mindestens ein Tensid und/oder einen oder mehrere Hilfsstoffe enthält.

3. Verfahren für die kurative oder präventive Bekämpfung von phytopathogenen Organismen von Pflanzen der Gattungen *Alternaria, Sclerotinia, Monilinia, Wilsonomyces, Ascochyta* und *Mycosphaerella,* **dadurch gekennzeichnet, daß** man Pyrimethanil und Iprodione verwendet.

4. Verfahren nach Anspruch 3, **dadurch gekennzeichnet, daß** Pyrimethanil in Mengen im Bereich von 50 bis 1000 g/ha verwendet wird.

5. Verfahren nach Anspruch 3, **dadurch gekennzeichnet, daß** Pyrimethanil in Mengen im Bereich von 100 bis 600 g/ha verwendet wird.

6. Verfahren nach einem der Ansprüche 3 bis 5, **dadurch gekennzeichnet, daß** Iprodione in Mengen im Bereich von 50 bis 1000 g/ha verwendet wird.

7. Verfahren nach einem der Ansprüche 3 bis 6, **dadurch gekennzeichnet, daß** Iprodione in Mengen im Bereich von 100 bis 600 g/ha verwendet wird.

8. Verfahren nach einem der Ansprüche 3 bis 7 für die Behandlung und/oder den Schutz von Kulturen, vorzugsweise für den Schutz von Gemüse-, Obstoder Ölkulturen.

9. Verfahren nach einem der Ansprüche 3 bis 8 für die Behandlung und/oder den Schutz von Gemüse-, Obstoder Ölkulturen.

10. Verfahren nach einem der Ansprüche 3 bis 9 für die Bekämpfung von Pilzen der Gattungen
- *Alternaria,* z.B. *Alternaria solani* (Solanaceen-Alternaria, insbesondere Blattfleckenkrankheit der Tomate und Dürrfleckenkrankheit der Kartoffel), *Alternaria dauci* (Möhrenschwärze), *Alternaria porri* (Purpurfleckenkrankheit der Zwiebel), *Alternaria kikuchiana* (Birnenschwärze), *Alternaria mali* (Blattfleckenkrankheit des Apfels), *Alternaria brassicae* und *Alternaria brassicicola* (Dürrfleckenkrankheit des Kohls),
- *Sclerotinia,* z.B. *Sclerotinia minor, Sclerotinia sclerotiorum* (Sklerotinia-Fäule des Salats, der Bohne und dergleichen),
- *Monilinia,* z.B. *Monilinia fructicola*, *Monilinia fructigena* oder *Monilinia laxa* (Braunfäule des Steinobsts),
- *Wilsonomyces,* z.B. *Wilsonomyces carpophila* (Schrotschußkrankheit des Steinobsts),
- der Gattung *Ascochyta,* z.B. *Ascochyta pisi*,
- *Mycosphaerella,* z.B. *Mycosphaerella pinodes* (Anthraknose-Krankheiten von proteinreichen Erbsen).

## Revendications

1. Composition fongicide comprenant du pyriméthanil et de l'iprodione en des proportions respectives allant de 1/3 à 3, de préférence allant de 1/2 à 2.

2. Composition selon la revendication 1, comprenant un support, solide ou liquide, utilisable notamment dans le domaine de l'agriculture, et éventuellement au moins un agent tensioactif et/ou un ou plusieurs agents auxiliaires.

3. Méthode de lutte à titre curatif ou préventif contre les organismes phytopathogènes des plantes des genres *Alternaria, Sclerotinia, Monilinia, Wilsonomyces, Ascochyta* et *Mycosphaerella,* **caractérisée par** l'utilisation de pyriméthanil et d'iprodione.

4. Méthode selon la revendication 3, **caractérisée en ce que** le pyriméthanil est mis en oeuvre en des quantités allant de 50 à 1000 g/ha.

5. Méthode selon la revendication 3, **caractérisée en ce que** le pyriméthanil est mis en oeuvre en des quantités allant de 100 à 600 g/ha.

6. Méthode selon l'une quelconque des revendications 3 à 5, **caractérisée en ce que** l'iprodione est mise en oeuvre en des quantités allant de 50 à 1000 g/ha.

7. Méthode selon l'une quelconque des revendications 3 à 6, **caractérisée en ce que** l'iprodione est mise en oeuvre en des quantités allant de 100 à 600 g/ha.

8. Méthode selon l'une quelconque des revendications 3 à 7, pour le traitement et/ou la protection des cultures, préférablement pour la protection des cultures légumières, fruitières ou oléagineuses.

9. Méthode selon l'une quelconque des revendications 3 à 8, pour le traitement et/ou la protection des cultures légumières, fruitières ou oléagineuses.

10. Méthode selon l'une quelconque des revendications 3 à 9, pour lutter contre les champignons des genres
- *Alternaria,* par exemple *Alternaria solani* (alternariose des solanées, et notamment de la tomate et de la pomme de terre ), *Alternaria dauci* (alternariose de la carotte), *Alternaria porri* (alternariose de l'oignon), *Alternaria kikuchiana* (alternariose du poirier), *Alternaria mali* (alternariose du pommier), *Alternaria brassicae* et *Alternaria brassicicola* (alternariose des crucifères),
- *Sclerotinia,* par exemple *Sclerotinia minor, Sclerotinia sclerotiorum* (sclérotinioses de la laitue, du haricot...),
- *Monilinia*, par exemple *Monilinia fructicola*, *Monilinia fructigena* ou *Monilinia laxa* (monilioses des arbres fruitiers à noyaux),
- *Wilsonomyces,* par exemple *Wilsonomyces carpophila* (shot-hole des arbres fruitiers à noyaux),
- du genre *Ascochyta,* par exemple *Ascochyta pisi,*
- *Mycosphaerella,* par exemple *Mycosphaerella pinodes* (anthracnoses du pois protéagineux).
